# EUROPEAN PATENT APPLICATION

(11) **EP 4 756 951 A1**
(43) Date of publication of application: **10.06.2026**
(21) Application number: 24904193.0
(22) Date of filing: 06.12.2024
(51) Int. Cl.: H01M 10/04, H01M 4/04, G05B 19/418, G06F 11/34, G06Q 50/04, H01M 10/42

(54) **SECONDARY BATTERY MANUFACTURING SYSTEM AND SECONDARY BATTERY MANUFACTURING METHOD**

(30) Priority: 11.12.2023 KR 20230178213; 24.07.2024 KR 20240097709
(71) Applicant: LG Energy Solution, Ltd., Seoul 07335 (KR)
(72) Inventor: JANG, Seong Won, Daejeon 34122 (KR); PARK, Kyoung Chan, Daejeon 34122 (KR); LEE, Hee Won, Daejeon 34122 (KR); PARK, Yeong Heon, Daejeon 34122 (KR); KIM, Jeong Jin, Daejeon 34122 (KR); HAN, Hyung Wook, Daejeon 34122 (KR); LEE, Seok Hun, Daejeon 34122 (KR); KIM, Min Su, Daejeon 34122 (KR); JUNG, Tae Kwang, Daejeon 34122 (KR)
(74) Representative: BCKIP Part mbB
(86) International application number: PCT/KR2024/019996
(87) International publication number: WO 2025/127628

(57) **Abstract**

Embodiments provide a secondary battery manufacturing system. The secondary battery manufacturing system includes a controller configured to collect cell identifier (ID) sensing data, based on a cell ID sensing signal generated based on a data matrix read by a data matrix reader, in which the cell ID sensing data includes a cell ID that is a read value of the data matrix and a device number matching the cell ID, and the device number indicates a site where the data matrix reader is installed.

## Description

### [Technical Field]

The present invention relates to a secondary battery manufacturing system and a secondary battery manufacturing method. The present application claims the benefit of priority based on Korean Patent Application No. 10-2023-0178213, filed on December 11, 2023 and Korean Patent Application No. 10-2024-0097709, filed on July 24, 2024, and the entire contents of the Korean patent applications are incorporated herein by reference.

### [Background Art]

Secondary batteries can be charged and discharged a plurality of times unlike primary batteries. Secondary batteries have been widely used as energy sources for various types of wireless devices such as handsets, laptop computers, and cordless vacuum cleaners. Recently, a main use of secondary batteries is moving from mobile devices to mobility, as manufacturing costs per unit capacity of secondary batteries drastically decrease due to improved energy density and economies of scale and a range of battery electric vehicles (BEVs) increases to the same level as fuel vehicles.

A secondary battery is manufactured by an electrode process, an assembly process, and an activation process. To improve the yield and reliability of a secondary battery manufacturing process, it is important to ensure the traceability of the manufacturing process. Accordingly, various studies have been conducted to ensure traceability of the secondary battery manufacturing process.

### [Disclosure]

### [Technical Problem]

The present invention is directed to providing a secondary battery manufacturing system with improved traceability and a secondary battery manufacturing method.

### [Technical Solution]

Embodiments of the present invention provide a secondary battery manufacturing system. The secondary battery manufacturing system includes a controller configured to collect cell identifier (ID) sensing data, based on a cell ID sensing signal generated based on a data matrix read by a data matrix reader, in which the cell ID sensing data includes a cell ID that is a read value of the data matrix and a device number matching the cell ID, and the device number indicates a site where the data matrix reader is installed.

The cell ID sensing data may further include a serial number matching the cell ID and indicating a sensing sequence of the data matrix.

The serial number may be counted by the controller.

The device number may further indicate a process to be performed by equipment on which the reader is installed.

The equipment may be configured to perform one of a notching process, a lamination process, a stacking process, a folding process, and a packaging process.

The secondary battery manufacturing system may further include a processor including a first application programming interface (API) configured to receive the cell ID sensing data.

The processor may be configured to process an image of an electrode intermediate product including the data matrix, and the device number may indicate a method of processing the image of the electrode intermediate product by the processor.

The processor may be configured to determine quality of the electrode intermediate product, based on the image of the electrode intermediate product.

The processor may further include a second API configured to communicate with a server.

The second API may be configured to transmit a log file of the processor to the server.

The transmission of the log file may be based on a trigger event.

The trigger event may include duplication of the cell ID of the cell ID sensing data.

The trigger event may include omission of the cell ID of the cell ID sensing data.

The trigger event may include omission of the device number of the cell ID sensing data.

The trigger event may include omission of a serial number of the cell ID sensing data, and the serial number may match the cell ID and the serial number the cell ID sensing data indicates a sensing sequence of the data matrix.

The trigger event may be a command to collect the log file transmitted from the server.

The trigger event may be an arrival of a preset date and time when the log file is to be collected.

The second API may be configured to receive update data for updating the first API from the server.

The second API may be configured to receive a command to operate the first API from the server.

Example embodiments provide a secondary battery manufacturing system. The secondary battery manufacturing system includes a data matrix reader configured to sense a data matrix to generate a cell ID sensing signal, and a controller configured to collect cell ID sensing data, based on the cell ID sensing signal, in which the cell ID sensing data includes a cell ID that is a read value of the data matrix, and a serial number matching the cell ID and indicating a sensing sequence of the data matrix.

The cell ID sensing data may further include a device number indicating a site where the data matrix reader is installed.

Embodiments provide a secondary battery manufacturing method. The secondary battery manufacturing method includes transmitting a log file of a processor to a server, and analyzing the log file, in which the log file includes a message transmission record of the processor, the processor is configured to receive cell ID sensing data, the cell ID sensing data includes a cell ID that is a read value of one of an electrode intermediate product, an electrode, a mono-cell and a stack cell, and a device number matching the cell ID, and the device number indicates a site where a data matrix reader configured to read the data matrix is installed.

The cell ID sensing data may further include a serial number matching the cell ID and indicating a sensing sequence of the data matrix.

The serial number may be counted by and the data matrix and a controller configured to communicate with the processor.

The device number may further indicate a process to be performed by equipment on which the data matrix reader is installed.

The equipment may be configured to perform one of a notching process, a lamination process, a stacking process, a folding process, and a packaging process.

The processor may include a first API configured to receive the cell ID sensing data.

The processor may be configured to process an image of an electrode intermediate product including the data matrix, and the device number may indicate a method of processing the image of the electrode intermediate product by the processor.

The processor may be configured to determine quality of the electrode intermediate product, based on the image of the electrode intermediate product.

The processor may further include a second API configured to communicate with a server.

The second API may be configured to receive update data for updating the first API from the server.

The second API may be configured to receive a command to operate the first API from the server.

The transmission of the log file may be based on a trigger event.

The trigger event may include duplication of the cell ID of the cell ID sensing data.

The trigger event may include omission of the cell ID of the cell ID sensing data.

The trigger event may include omission of the device number of the cell ID sensing data.

The trigger event may include omission of a serial number of the cell ID sensing data, and the serial number may match the cell ID and the serial number the cell ID sensing data indicates a sensing sequence of the data matrix.

The trigger event may be a command to collect the log file transmitted from the server.

The trigger event may be an arrival of a preset date and time when the log file is to be collected.

### [Advantageous Effects]

A secondary battery manufacturing system according to embodiments of the present invention may include a controller configured to collect cell identifier (ID) sensing data including a device number and a serial number that match a cell ID. Furthermore, the secondary battery manufacturing system may include a first application programming interface (API) for communication with the controller and a second API configured to transmit a log file of a processor to a server based on a trigger event. According to embodiments, the server may be configured to transmit either a command to resolve a problematic trigger event based on an analysis of the log file or an update file of the first API to the processor. In particular, because the cell ID includes the device number and the serial number, it is possible to expedite the determination of secondary battery manufacturing equipment and an equipment network in which the problematic trigger event occurs and the resolving of the problematic trigger event, and to improve the reliability of the manufacture of a secondary battery.

Effects achievable from embodiments of the present invention are not limited to the above-described effects, and other effects that are not described herein will be clearly derived and understood by those of ordinary skilled in the art to which the embodiments of the present invention pertain from the following description. That is, unintended effects achieved when the embodiments of the present invention are implemented are derivable by those of ordinary skilled in the art from the embodiments of the present invention.

### [Brief Description of the Drawings]

FIGS. 1 and 2 are block diagrams of a secondary battery manufacturing system according to embodiments.
FIGS. 3 to 6 illustrate examples of an electrode intermediate product according to embodiments.
FIG. 7 is a flowchart of a secondary battery manufacturing method according to embodiments.
FIG. 8 is a block diagram for describing a secondary battery manufacturing method according to embodiments.

### [Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and should be understood according to meanings and concepts corresponding to the present invention on the basis of the principle that the inventor(s) of the application can appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention are not described in detail when it is determined that they would obscure the subject matter of the present invention due to unnecessary detail.

Because embodiments of the present invention are provided to more fully explain the present invention to those of ordinary skill in the art, the shapes, sizes, etc. of components illustrated in the drawings may be exaggerated, omitted, or schematically illustrated for clarity. Therefore, it should not be understood that the sizes or proportions of components fully reflect the actual sizes or proportions thereof.

### (First Embodiment)

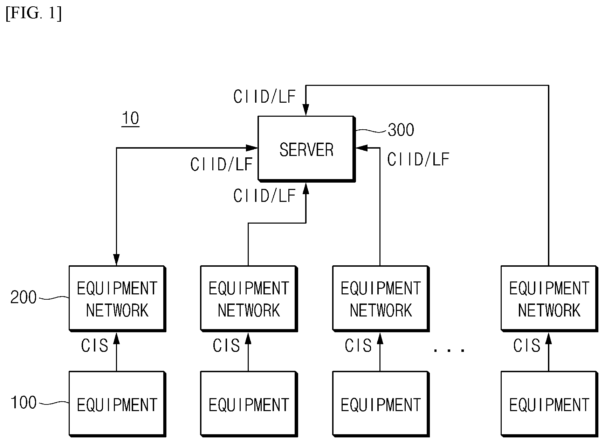

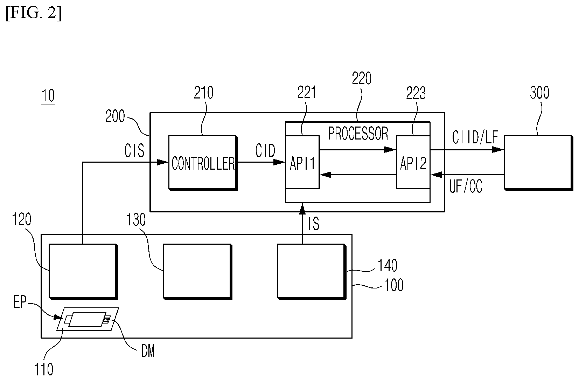

FIGS. 1 and 2 are block diagrams of a secondary battery manufacturing system 10 according to embodiments.

Referring to FIGS. 1 and 2, the secondary battery manufacturing system 10 may include a plurality of pieces of battery manufacturing equipment 100, a plurality of equipment networks 200, and a server 300.

The pieces of secondary battery manufacturing equipment 100 may be configured to perform, for example, an assembly process of a secondary battery. The pieces of secondary battery manufacturing equipment 100 may include a transfer device 110, a data matrix reader 120, a processing device 130, and an inspector 140.

The transfer device 110 may be configured to transfer an electrode intermediate product EP. According to embodiments, the transfer device 110 may be a linear motion system (LMS). The transfer device 110 may include a conveyor device or a roll-to-roll transfer device.

The data matrix reader 120 may be configured to sense a data matrix DM of the electrode intermediate product EP to generate a cell identifier (ID) sensing signal CIS. As a non-limiting example, the data matrix DM may be two-dimensional (2D) barcode. The data matrix DM may include information about an electrode ID for identifying the electrode intermediate product EP. That is, the cell ID sensing signal CIS generated based on the reading of the data matrix DM may include a plurality of symbols for distinguishing and/or identifying the electrode intermediate product EP. Here, the term "symbol" may be understood as a general term including signs, characters, marks, etc. that represent a particular idea.

According to embodiments, the data matrix DM may be on a negative electrode tab of the electrode intermediate product EP. According to other embodiments, the data matrix DM may be on a positive electrode tab of the electrode intermediate product EP. According to other embodiments, the data matrix DM may be on each of the negative electrode tab and the positive electrode tab of the electrode intermediate product EP.

The processing device 130 may be configured to process the electrode intermediate product EP. The pieces of secondary battery manufacturing equipment 100 may be configured to perform different processes. For example, some of the pieces of secondary battery manufacturing equipment 100 may be configured to perform a notching process, some of the pieces of secondary battery manufacturing equipment 100 may be configured to perform a lamination process, some of the pieces of secondary battery manufacturing equipment 100 may be configured to perform a stacking process, some of the pieces of secondary battery manufacturing equipment 100 may be configured to perform a folding process, and some of the pieces of secondary battery manufacturing equipment 100 may be configured to perform a packaging process.

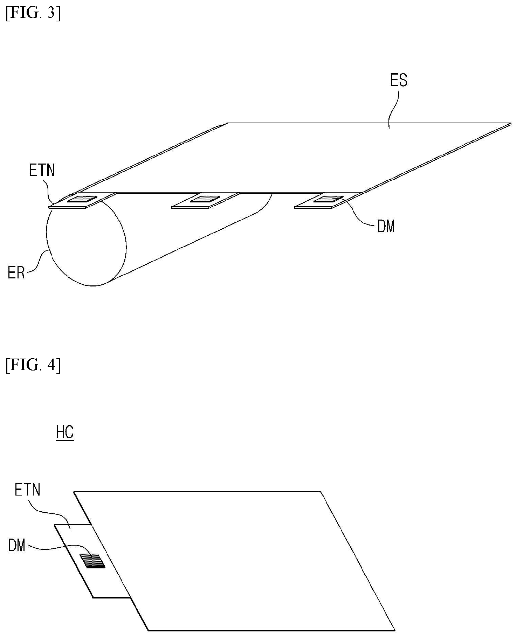

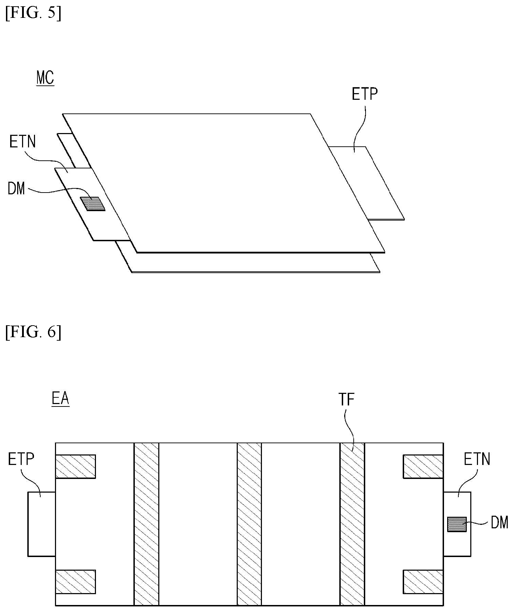

FIGS. 3 to 6 illustrate electrode intermediate products EP according to embodiments. That is, each of the electrode intermediate products EP may be an electrode sheet ES of FIG. 3, a half-cell HC of FIG. 4, a mono-cell MC of FIG. 5, or an electrode assembly EA of FIG. 6. The electrode intermediate products EP are intermediate products for providing a finished battery cell and may include an electrode.

Referring to FIG. 3, the notching process may be performed on the electrode sheet ES unwound from an electrode roll ER by a rewinder. In the notching process, an electrode tab ETN may be formed on an uncoated part of the electrode sheet ES. In the notching process, a V-shaped groove may be further formed in the electrode sheet ES. The data matrix DM may be formed on the electrode tab ETN. The data matrix DM may be formed by a method such as inkjet printing or laser printing. According to embodiments, the electrode sheet ES on which the data matrix DM is formed may include a negative electrode but is not limited thereto. The electrode sheet ES may include a positive electrode. After the notching process, the electrode sheet ES may be individualized to unit electrodes including the electrode tab ETN. The positive electrode may include a positive electrode current collector and a positive electrode active material. The negative electrode may include a negative electrode current collector and a negative electrode active material.

A thickness of the positive electrode current collector may range from about 3 µm to about 500 µm. The positive electrode current collector may not cause a chemical change in a finally manufactured secondary battery and may have high conductivity. The positive electrode current collector may include, for example, stainless steel, nickel, titanium, baked carbon, and aluminum. The positive electrode current collector may include stainless steel surface-treated with carbon, nickel, titanium, silver, or the like. A surface of the positive electrode current collector may include a fine uneven structure to increase the adhesion of the active material. The positive electrode current collector may be in the form of film, sheet, foil, net, porosity, foam, nonwoven fabric or the like.

A thickness of the negative electrode current collector may be in a range of about 3 µm to about 500 µm. The negative electrode current collector may not cause a chemical change in a finally manufactured secondary battery and may have high conductivity. The negative electrode current collector may include stainless steel, aluminum, nickel, titanium, baked carbon, and aluminum-cadmium alloy. The negative electrode current collector may include stainless steel surface-treated with carbon, nickel, titanium, silver, or the like. A surface of the negative electrode current collector may include a fine uneven structure to increase the adhesion of the active material. The negative electrode current collector may be in the form of film, sheet, foil, net, porosity, foam, nonwoven fabric or the like.

A positive electrode active material is a material that may cause an electrochemical reaction. The positive electrode active material may be a lithium transition metal oxide. For example, the positive electrode active material may include: a layered compound substituted with one or more transition metal, e.g., lithium cobalt oxide (LiCoO₂) or lithium nickel oxide (LiNiO₂); lithium manganese oxide substituted with one or more transition metal; lithium nickel-based oxide expressed by a chemical formula of LiNi_{1-y}M_{y}O₂ (here, M is Co, Mn, Al, CU, Fe, Mg, B, Cr, Zn or Ga, and 0.01≤y≤0.7); lithium nickel cobalt manganese compound oxide expressed by a chemical formula of Li_{1+z}Ni_{b}Mn_{c}Co_{1-(b+c+d)}M_{d}O₍₂₋ₑ₎A, e.g., Li_{1+z}Ni_{1/3}Co_{1/3}Mn_{1/3}O₂ or Li_{1+zN}i_{0.4}Mn_{0.4}Co_{0.2}O₂ (here, -0.5≤z≤0.5, 0.1≤b≤0.8, 0.1≤c≤0.8, 0≤d≤0.2, 0≤e≤0.2, b+c+d<1, M is Al, Mg, Cr, Ti, Si or Y, and A is F, P or Cl); or olivine-based lithium metal phosphate expressed by a chemical formula of Li₁₊ₓM_{1-y}M'_{y}PO_{4-z}X_{z} (here, M is a transition metal, and more particularly, Fe, Mn, Co or Ni, M' is Al, Mg or Ti, X is F, S or N, -0.5≤x≤+0.5, 0≤y≤0.5, and 0≤z≤0.1).

A negative electrode active material may include, for example, carbon such as non-graphitized carbon or graphite-based carbon. The negative electrode active material may include, for example, a metal composite oxide such as LiₓFe₂O₃ (0≤x≤1), LixWO₂ (0≤x≤1), or SnₓMe₁₋ₓMe'_{y}O_{z} (here, Me is Mn, Fe, Pb, or Ge, Me' is Al, B, P, Si, a Group I element, a Group II element or a Group III element of the periodic table, or halogen, 0<x≤1, 1≤y≤3, and 1≤z≤8). The negative electrode active material may include, for example, lithium metal, lithium alloy, silicon-based alloy, and tin-based alloy. The negative electrode active material may include, for example, a metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅. The negative electrode active material may include, for example, a conductive polymer such as polyacetylene, a Li-Co-Ni-based material, etc.

Referring to FIGS. 4 and 5, in the lamination process, individualized unit electrodes may be bonded to an separator. In the lamination process, in order to improve a bonding force between the separator and the unit electrodes, the separator and the unit electrodes may be heat-treated. A half-cell HC or a mono-cell MC may be provided by the lamination process. A bi-cell or the like may be provided by the lamination process. The half-cell HC may include either a separator and a positive electrode or a separator and a negative electrode. The half-cell HC may include an electrode tab ETN including the data matrix DM. The mono-cell MC may include a positive electrode, a first separator, a negative electrode and a second separator that are stacked sequentially. The mono-cell MC may include an electrode tab ETN including the data matrix DM and an electrode tab ETP having a polarity opposite to that of the electrode tab ETN. Unlike in FIG. 5, the data matrix DM may be formed on each of the electrode tabs ETP and ETN or only on the electrode tab ETP.

Referring to FIGS. 4 to 6, in the stacking process, at least one of a half-cell HC, a mono-cell MC, and bi-cells may be repeatedly stacked. The electrode assembly EA may be provided by the stacking process. The electrode assembly EA may include a tape for fixing the positive and negative electrodes. The electrode assembly EA may include an electrode tab ETN including the data matrix DM and an electrode tab ETP having a polarity opposite to that of the electrode tab ETN. Unlike in FIG. 6, the data matrix DM may be formed on each of the electrode tabs ETP and ETN or only on the electrode tab ETP.

In the folding process, the half-cell, the mono-cell, and the bi-cells may be wound by a separator. The packaging process may include inserting an electrode assembly into a case, injecting an electrolyte, and sealing the case.

The inspector 140 may be configured to inspect the electrode intermediate product EP. The inspector 140 may include, for example, a time-delay-and-integration (TDI) camera, a component metal oxide semiconductor (CMOS) image sensor, and the like. The inspector 140 may include a time-of-flight (TOF) sensor and the like. The inspector 140 may include an emitter and a receiver that are configured to perform measurement using non-destructive signals such as ultrasound waves, microwaves, terahertz waves, or infrared rays. The inspector 140 may include analog and/or digital sensors, such as a biosensor, a chemical sensor, a composition sensor, a current and/or power meter, an air quality sensor, a gas sensor, a hall effect sensor, a brightness level sensor, and an optical sensor. The measuring device may include a pressure sensor, a temperature sensor, an ultrasonic sensor, a proximity sensor, a door state sensor, a motion tracking sensor, a humidity sensor, a visible light and infrared sensor, a camera, etc. An inspection signal IS may be generated by the inspector 140, and the inspector 140 may be configured to transmit the inspection signal IS to a processor 220.

The pieces of secondary battery manufacturing equipment 100 may be configured to perform an electrode process and an activation process. The electrode process may contain a coating process, a roll pressing process, and a slitting process. In the coating process, an electrode sheet may be coated with an electrode slurry. The electrode slurry may include an active material, a conductive agent, a binder, and a solvent. The electrode slurry may be prepared by dissolving the active material, the conductive agent, the binder, etc. in the solvent. In the roll press process, the electrode sheet coated with the electrode slurry may be passed through between pressing rolls. Through the roll pressing process, a surface of the electrode sheet may be planarized, and a binding force between an active material and a current collector on the electrode sheet be improved. The electrode sheet may be divided into a plurality of electrode sheets by the slitting process. The slitting process may be an optional process. The slitting process of a slitting device may be omitted according to specifications of an electrode assembly of a battery cell to be finally manufactured. Electrode rolls completed by the slitting device may be processed by a winding device or a notching device. Accordingly, a stack type electrode assembly or a cylindrical electrode assembly may be provided.

The activation process may include charging/discharging, an aging process, a degassing process, a performance inspection, and open circuit voltage (OCV)-based inspection. In the activation process, a solid electrolyte interphase (SEI) film may be formed on a surface of the negative electrode through initial charging. The SEI film is a thin film generated on a surface of a negative electrode material when a battery cell is charged for the first time after the manufacture of the battery cell. When the battery cell is charged, lithium ions in the battery cell may move to a negative electrode, and an SEI film may be formed on a surface of a negative electrode material due to a chemical reaction occurring when materials in an electrolyte are electrolyzed for the first time during the movement of the lithium ions. The SEI film may be a type of a separator. The SEI film may prevent additional decomposition reaction of the electrolyte when the lithium ions move from a positive electrode to the negative electrode for charging of a battery. In the aging process, the battery cell may be stored at room temperature for a certain time (30 minutes to 3 hours as a non-limiting example) to stabilize the charged or discharged battery cell. The aging process is aimed to uniformly disperse the electrolyte in a pouch cell so that the electrolyte may uniformly permeate both the positive electrode and the negative electrode. The mobility of the lithium ions may be enhanced by the aging process. A gas may be generated inside the battery cell during charging/discharging and the aging process. In the degassing process, the gas may be removed from the inside of the battery cell. The performance inspection may include a capacity test and an inspection for screening defects. A battery cell with a low-voltage defect may be sorted out by the OCV-based inspection. A low-voltage defect of a battery cell may be caused by a metal foreign material inside the battery cell. For example, when a positive electrode plate of a battery cell contains a metal foreign material such as iron or copper, the metal foreign material may grow into a dendrite on the negative electrode. The dendrite causes an undesired short circuit inside the battery cell, leading to a failure and ignition of the battery cell.

The equipment networks 200 may allow a corresponding one of the pieces of secondary battery manufacturing equipment 100 to be online. The equipment networks 200 may be configured to collect data of events occurring in the pieces of secondary battery manufacturing equipment 100. The equipment networks 200 may be configured to transmit data of events occurring in the pieces of secondary battery manufacturing equipment 100 to the server 300.

Event data collected by the equipment networks 200 may match a cell ID. Accordingly, an event occurring in a secondary battery manufacturing process may match the electrode intermediate products EP, and the traceability of a process of a problematic electrode intermediate product EP may be provided after shipment.

The equipment networks 200 may include a controller 210 and a processor 220. The controller 210 may be configured to collect cell ID sensing data CID based on the cell ID sensing signal CIS. The cell ID sensing data CID may include a cell ID that is a read value of the data matrix DM, a device number matching the cell ID, and a serial number matching the cell ID.

According to embodiments, the device number may indicate a site where the data matrix reader 120 is installed (i.e., a site where the secondary battery manufacturing equipment 100 is installed). The site where the secondary battery manufacturing equipment 100 is installed may include an area name, a building number, etc.

According to embodiments, the device number may indicate an equipment group to which the secondary battery manufacturing equipment 100 including the data matrix reader 120 belongs. Here, the equipment group may include an electrode process group, an assembly process group, and an activation process group. That is, each of the pieces of secondary battery manufacturing equipment 100 may be configured to perform a sub-process of one of the electrode process, the assembly process, and the activation process, and the cell ID sensing data CID may indicate a process to which the pieces of secondary battery manufacturing equipment 100 belong among the electrode process, the assembly process and the activation process.

According to embodiments, the device number may further indicate a process to be performed by the pieces of secondary battery manufacturing equipment 100 in which the data matrix reader 120 is installed. For example, the device number may indicate one of the notching, lamination, stacking, folding, and packaging processes.

According to embodiments, the device number may be indicated with respect to the processor 220. More specifically, the device number may indicate a method of processing an image of the electrode intermediate product EP by the processor 220. The processor 220 may form a vision machine together with the inspector 140 and include an algorithm for processing the image of the electrode intermediate product EP. The algorithm of the processor 220 may include various algorithms for determining the quality of the electrode intermediate product EP (i.e., whether the electrode intermediate product EP is a defective product or a normal product) based on an image of the electrode intermediate product EP, including an artificial neural network that is pre-trained or trained in real time. For example, the processor 220 may be configured to determine a defect in one of conformity, sealing, dimensions, short circuit, NG marking, a gap, the appearance of a tab, the appearance of a separator, alignment between elements, and welding quality.

The serial number of the cell ID sensing data CID may be counted by the controller 210. The serial number of the cell ID sensing data CID may indicate a sensing sequence of the cell ID matching the serial number. The secondary battery manufacturing system includes the pieces of secondary battery manufacturing equipment 100, and some of the pieces of secondary battery manufacturing equipment 100 may include two or more data matrix readers 120. The serial number may be initialized based on a set refresh cycle (e.g., one day or one week).

The controller 210 may be a programmable logic controller (PLC). A PLC is a special type of microprocessor-based controller that stores instructions using a programmable memory and implements functions such as logic, sequencing, timing, counting and arithmetic operations to control machines and processes. It is easy to operate and program the PLC.

The controller 210 may include a power supply, a CPU, an input interface, an output interface, a communication interface, and memory devices. For an operation of the controller 210, the power supply may be configured to supply power to the other elements of the controller 540, such as the CPU, the input interface, the output interface, the communication interface, and the memory devices. The memory devices may include a read only memory (ROM) configured to store system programs such as operating systems, and a random access memory (RAM) configured to store data such as user programs, state information of input and output devices, and values of a timer, a counter, and other internal devices. The CPU may be configured to implement logic and control communication between modules that convert an input signal into an output operation signal. The CPU may operate based on a system program and a user program stored in the memory devices. The CPU may be configured to write or read inspection data and measurement data to or from data areas of the memory devices, based on the system program and the user program. Conditions or data of industrial devices and production processes may be transmitted to the CPU through an input module. A result of processing performed by the CPU may be transmitted to an actuator through an output module. The communication interface may be configured to relay transmission and reception of data between the controller 210 and the processor 220.

However, embodiments are not limited thereto, and the controller 210 may include one of a simple controller, a complex processor such as a microprocessor, a CPU or a GPU, a processor configured by software, dedicated hardware, and firmware. The controller 210 may be implemented, for example, by a general-purpose computer or application-specific hardware such as a digital signal processor (DSP), a field-programmable gate array (FPGA) or an application-specific integrated circuit (ASIC).

The processor 220 may be configured to receive an inspection signal IS of the inspector 140. The processor 220 may include a first application programming interface (API) 221 for communicating with the controller 210. The first API 221 may be configured to receive the cell ID sensing data CID from the controller 210. The first API 221 may be configured to convert the cell ID sensing data CID transmitted from the controller 210 into a language of the processor 220. The first API 221 may be software designed for communication with the controller 210.

The processor 220 may include a second API 223 for communicating with the server 300. The second API 223 may be configured to transmit cell ID-related inspection data CIID to the server 300. The cell ID-related inspection data CIID may be generated based on the inspection signal IS and the cell ID sensing data CID. The processor 220 may be configured to determine a value representing the quality of the electrode intermediate product EP (e.g., whether the electrode intermediate product EP is defective or normal) by processing the inspection signal IS (e.g., an image of the electrode intermediate product EP) as described above. The cell ID-related inspection data CIID may further include values indicating the quality of the electrode intermediate product EP, in addition to the cell ID sensing data CID. The cell ID-related inspection data CIID may include values indicating the quality of the electrode intermediate product EP, and the cell ID, the device number, and the serial number matched thereto.

The second API 223 may be configured to transmit a log file LF of the processor 220 to the server 300. Here, the log file LF is a file in which an event occurring while an operating system of the processor 220 or software is running or messages between different types of software (e.g., communication software) of the processor 220 are recorded.

According to embodiments, the server 300 may be configured to store and process raw measurement data. The server 300 may control the quality of the manufacture of a secondary battery by continuously monitoring the manufacture of the secondary battery based on the measurement data. The server 300 may collect and analyze manufacturing data and the log file LF in almost real time to identify and fix problematic conditions in a timely manner or to provide a notification to an operator before potential problems occur.

The server 300 may be configured to transmit an update file UF for updating the first API 221 to the second API 223. The server 300 may be configured to transmit an operation command OC to operate the first API 221 to the second API 223.

According to embodiments, the server 300 may be a statistical process controller (SPC) but is not limited thereto. The server 300 may be provided separately from an SPC.

The server 300 may include a physical server or a cloud server. The server 300 may be implemented as a virtual server but is not limited thereto. The server 300 may provide data and an analysis result to an operator through various frameworks. A framework may include a protocol that supports data transmission so that a client device may visualize data through a user interface and provide updated visualization when new data is calculated by the server 300. The protocol that supports data transmission may employ HTML, JavaScript, and/or JSON.

The server 1020 may include various types of APIs for storing data in a database and other data management tools. The APIs may also be used to retrieve data from databases of various data management systems. The data management systems may provide access to a database, pull or retrieve data from the database, and generate metrics. Here, the metrics are a tool for visualizing data. The metrics may include measured values generated in a time-series manner and be used to monitor applications and generate a status warning.

More specifically, the server 300 may be configured to store the cell ID-related inspection data CIID and the log file LF. The server 300 may be configured to transmit a uniform resource locator (URL) (or schema), including a source code for collecting cell ID data CID and displaying an error status on a client device, to the client device in response to an API request from the client device. The collection of the cell ID data CID and the error status may be visualized using a table and a graph. The client device may access the source code for visualizing and displaying the collection of the cell ID data CID and the error status through the URL (or schema).

The processor 220 and the server 300 may be implemented by hardware, firmware, software or a combination thereof. For example, the processor 220 and the server 300 may include a computing device such as a workstation computer, a desktop computer, a laptop computer, and a tablet computer. The processor 220 and the server 300 may include a simple controller, a complex processor such as a microprocessor, a CPU or a GPU, a processor configured by software, dedicated hardware, or firmware. The processor 220 and the server 300 may be implemented, for example, by a general-purpose computer or application-specific hardware such as a digital signal processor (DSP), a field-programmable gate array (FPGA) or an application specific integrated circuit (ASIC).

Operations of the processor 220 and the server 300 may be implemented by instructions stored in a machine-readable medium that is readable and executable by one or more processors. Here, the machine-readable medium may include an arbitrary apparatus for storing and/or transmitting information in a form readable by a machine (e.g., a computing device). Examples of the machine-readable medium may include a read-only memory (ROM), a random access memory (RAM), a magnetic disk storage medium, an optical storage medium, a flash memory, electrical, optical, acoustic or other types of radio signals (e.g., carrier waves, infrared signals, digital signals, etc.), and other signals.

The processor 220 and the server 300 may be configured by firmware, software, routines, and instructions for performing the above-described operations or a process to be described below. For example, the processor 220 and the server 300 may be instantiated in a memory.

The client device may be a device, e.g., a mobile device, such as a workstation computer, a laptop computer, a desktop computer, a tablet PC or a smart phone, or a wearable device, for communication with the server 160. The client device may include input tools for inputting an API request and a display device for collecting ID data CID and displaying an error status.

The secondary battery manufacturing system 10 may implement a plug-in architecture with an API for obtaining data to provide a plug-and-play connection among a sensor, a measuring device, and the inspector 140. Accordingly, resources in a certain process step and a specific site can be easily transferred to a different process and a different site or new resources can be easily introduced into each process step and each site.

In some embodiments, the secondary battery manufacturing system 10 may further include a manual input system that allows an operator to input manufacturing data. The secondary battery manufacturing system 10 may allow an operator to input data using an input tool, and a computer-based input of manufacturing data such as Excel file scraping. The manual input system may be, for example, human-machine interfaces (HMIs) of supervisory control and data acquisition (SCADA). Generally, SCADA may include a combination of software and hardware, such as a PLC and remote terminal units (RTUs). HMI is a screen that supports communication between an operator and an SCADA system, and is a key element of the SCADA system. For example, manual input by HMI may include selecting a type of defect and reflecting performance at the time of completion.

### (Second Embodiment: Method)

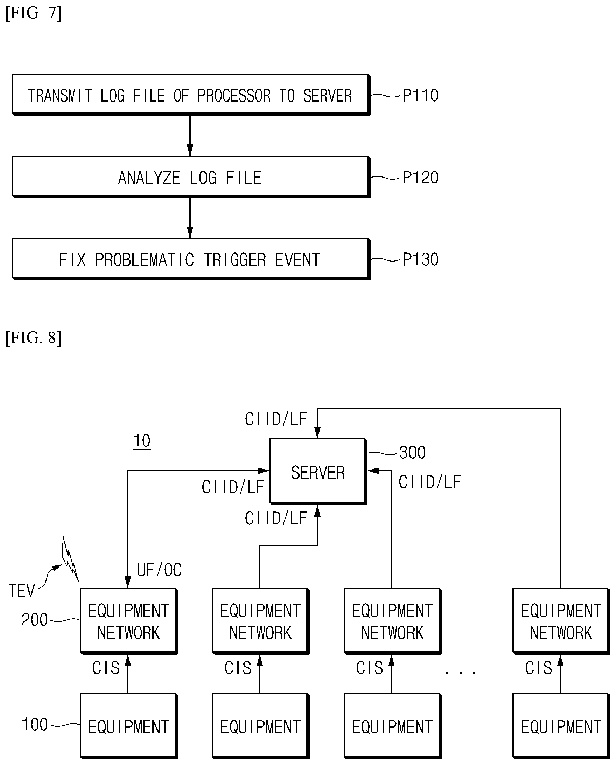

FIG. 7 is a flowchart of a secondary battery manufacturing method according to embodiments.

FIG. 8 is a block diagram for describing a secondary battery manufacturing method according to embodiments.

Referring to FIGS. 2, 7, and 8, a log file LF of the processor 220 may be transmitted to the server 300. The log file LF may be transmitted to the server 300 by the second API 223. The log file LF may be transmitted based on a trigger event TEV. That is, the second API 223 may be configured to transmit the log file LF to the server 300 when the trigger event TEV occurs.

According to embodiments, the trigger event TEV may include duplication of a cell ID of cell ID sensing data CID, omission of one of the cell ID, a serial number, and a device number of the cell ID sensing data CID, and abnormality (e.g., termination or version mismatch) of the first API 221. According to embodiments, the trigger event TEV may further include a command to collect the log file LF of the processor 220 transmitted from the server 300. According to embodiments, the log file LF may be collected based on a set reliability test period. That is, the trigger event TEV of the transmission of the log file LF may include the arrival of a date and time, at which the log file LF is to be collected and which is preset by an engineer or an operator.

The second API 223 may be configured to transmit a log file LF including logs temporally adjacent to a log corresponding to the trigger event TEV (i.e., logs recorded at adjacent times) to the server 300. The log file LF transmitted to the server 330 may include a set number of logs preceding the log corresponding to the trigger event TEV. The log file LF transmitted to the server 330 may further include a set number of logs subsequent to the log corresponding to the trigger event TEV. According to embodiments, the log file LF is transmitted to the server 300 based on the trigger event TEV to minimize resources of the server 300 to be allocated to receive, store and analyze the log file LF and improve the reliability of a secondary battery system.

Next, in P120, the log file LF may be analyzed. The log file LF may be analyzed by the server 300. The log file LF may be analyzed by an operator. Through the analyzing of the log file LF, the server 300 and/or the operator may determine the trigger event TEV.

Next, in P130, the trigger event TEV may be resolved. The trigger event TEV that is problematic may include, for example, duplication of a cell ID of cell ID sensing data CID, omission of one of the cell ID, a serial number, and a device number of the cell ID sensing data CID, and abnormality (e.g., termination or version mismatch) of the first API 221.

According to embodiments, the cell ID sensing data CID may include the device number and the serial number matching the cell ID. Accordingly, the server 300 and/or an operator may determine which of the pieces of secondary battery manufacturing equipment 100 and the equipment networks 200 is related to the trigger event TEV, when the log file LF is analyzed. Accordingly, the server 300 and/or the operator may transmit an update file UF and/or an operation command OC for resolving the trigger event TEV to an appropriate one among the pieces of secondary battery manufacturing equipment 100 and the equipment networks 200.

For example, when the trigger event TEV is caused by an old version of the first API 221, the server 300 and/or the operator may transmit an update file UF for updating the first API 221 to the second API 223 of the processor 220 of a corresponding equipment network 200.

For example, when the trigger event TEV is an abnormal termination or non-driving of the first API 221, the server 300 and/or the operator may transmit an operation command OC to operate the first API 221 to the second API 223 of the processor 220 of the corresponding equipment network 200.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

## Claims

1. A secondary battery manufacturing system comprising
a controller configured to collect cell identifier (ID) sensing data, based on a cell ID sensing signal generated based on a data matrix read by a data matrix reader,
wherein the cell ID sensing data includes a cell ID that is a read value of the data matrix and a device number matching the cell ID, and
the device number indicates a site where the data matrix reader is installed.

2. The secondary battery manufacturing system of claim 1, wherein the cell ID sensing data further includes a serial number matching the cell ID and indicating a sensing sequence of the data matrix.

3. The secondary battery manufacturing system of claim 2, wherein the serial number is counted by the controller.

4. The secondary battery manufacturing system of claim 1, wherein the device number further indicates a process to be performed by equipment on which the reader is installed.

5. The secondary battery manufacturing system of claim 4, wherein the equipment is configured to perform one of a notching process, a lamination process, a stacking process, a folding process, and a packaging process.

6. The secondary battery manufacturing system of claim 1, further comprising a processor including a first application programming interface (API) configured to receive the cell ID sensing data.

7. The secondary battery manufacturing system of claim 6, wherein the processor is configured to process an image of an electrode intermediate product including the data matrix, and
the device number indicates a method of processing the image of the electrode intermediate product by the processor.

8. The secondary battery manufacturing system of claim 7, wherein the processor is configured to determine quality of the electrode intermediate product, based on the image of the electrode intermediate product.

9. The secondary battery manufacturing system of claim 7, wherein the processor further includes a second API configured to communicate with a server.

10. The secondary battery manufacturing system of claim 9, wherein the second API is configured to transmit a log file of the processor to the server.

11. The secondary battery manufacturing system of claim 10, wherein the transmission of the log file is based on a trigger event.

12. The secondary battery manufacturing system of claim 12, wherein the trigger event includes duplication of the cell ID of the cell ID sensing data.

13. The secondary battery manufacturing system of claim 11, wherein the trigger event includes omission of the cell ID of the cell ID sensing data.

14. The secondary battery manufacturing system of claim 11, wherein the trigger event includes omission of the device number of the cell ID sensing data.

15. The secondary battery manufacturing system of claim 11, wherein the trigger event includes omission of a serial number of the cell ID sensing data,
wherein the serial number matches the cell ID, and
the serial number the cell ID sensing data indicates a sensing sequence of the data matrix.

16. The secondary battery manufacturing system of claim 11, wherein the trigger event is a command to collect the log file transmitted from the server.

17. The secondary battery manufacturing system of claim 11, wherein the trigger event is an arrival of a preset date and time when the log file is to be collected.

18. The secondary battery manufacturing system of claim 9, wherein the second API is configured to receive update data for updating the first API from the server.

19. The secondary battery manufacturing system of claim 9, wherein the second API is configured to receive a command to operate the first API from the server.

20. A secondary battery manufacturing system comprising
a data matrix reader configured to sense a data matrix to generate a cell identifier (ID) sensing signal; and
a controller configured to collect cell ID sensing data, based on the cell ID sensing signal,
wherein the cell ID sensing data includes a cell ID that is a read value of the data matrix, and a serial number matching the cell ID and indicating a sensing sequence of the data matrix.

21. The secondary battery manufacturing system of claim 20, wherein the cell ID sensing data further includes a device number indicating a site where the data matrix reader is installed.

22. A secondary battery manufacturing method comprising:
transmitting a log file of a processor to a server; and
analyzing the log file,
wherein the log file includes a message transmission record of the processor,
the processor is configured to receive cell identifier (ID) sensing data,
the cell ID sensing data includes a cell ID that is a read value of one of an electrode intermediate product, an electrode, a mono-cell and a stack cell, and a device number matching the cell ID, and
the device number indicates a site where a data matrix reader configured to read the data matrix is installed.

23. The secondary battery manufacturing method of claim 22, wherein the cell ID sensing data further includes a serial number matching the cell ID and indicating a sensing sequence of the data matrix.

24. The integrated battery manufacturing method of claim 23, wherein the serial number is counted by the data matrix and a controller configured to communicate with the processor.

25. The secondary battery manufacturing method of claim 22, wherein the device number further indicates a process to be performed by equipment in which the reader is installed.

26. The secondary battery manufacturing method of claim 25, wherein the equipment is configured to perform one of a notching process, a lamination process, a stacking process, a folding process, and a packaging process.

27. The secondary battery manufacturing method of claim 22, wherein the processor includes a first application programming interface (API) configured to receive the cell ID sensing data.

28. The secondary battery manufacturing method of claim 27, wherein the processor is configured to process an image of an electrode intermediate product including the data matrix, and the device number indicates a method of processing the image of the electrode intermediate product by the processor.

29. The secondary battery manufacturing method of claim 28, wherein the processor is configured to determine quality of the electrode intermediate product, based on the image of the electrode intermediate product.

30. The secondary battery manufacturing method of claim 28, wherein the processor further includes a second API configured to communicate with the server.

31. The secondary battery manufacturing method of claim 30, wherein the second API is configured to receive update data for updating the first API from the server.

32. The secondary battery manufacturing method of claim 30, wherein the second API is configured to receive a command to operate the first API from the server.

33. The secondary battery manufacturing method of claim 22, wherein the transmission of the log file is based on a trigger event.

34. The secondary battery manufacturing method of claim 33, wherein the trigger event includes duplication of the cell ID of the cell ID sensing data.

35. The secondary battery manufacturing method of claim 33, wherein the trigger event includes omission of the cell ID of the cell ID sensing data.

36. The secondary battery manufacturing method of claim 33, wherein the trigger event includes omission of the device number of the cell ID sensing data.

37. The secondary battery manufacturing method of claim 33, wherein the trigger event includes omission of a serial number of the cell ID sensing data,
wherein the serial number matches the cell ID, and
the serial number the cell ID sensing data indicates a sensing sequence of the data matrix.

38. The secondary battery manufacturing method of claim 33, wherein the trigger event is a command to collect the log file transmitted from the server.

39. The secondary battery manufacturing method of claim 33, wherein the trigger event is an arrival of a preset date and time when the log file is to be collected.
